# EUROPÄISCHE PATENTSCHRIFT

(11) **EP 4 602 671 B1**
(45) Veröffentlichungstag und Bekanntmachung des Hinweises auf die Patenterteilung: **04.11.2026**
(21) Anmeldenummer: 23773187.2
(22) Anmeldetag: 14.09.2023
(51) Int. Cl.: H01M 10/613, H01M 10/6557

(54) **ELEKTRISCHER ENERGIESPEICHER FÜR EIN KRAFTFAHRZEUG, INSBESONDERE FÜR EINEN KRAFTWAGEN**
ELECTRICAL ENERGY STORAGE DEVICE FOR A MOTOR VEHICLE, IN PARTICULAR FOR A MOTOR CAR
DISPOSITIF DE STOCKAGE D'ÉNERGIE ÉLECTRIQUE POUR UN VÉHICULE À MOTEUR, EN PARTICULIER POUR UNE AUTOMOBILE

(30) Priorität: 13.10.2022 DE 102022126656
(43) Veröffentlichungstag der Anmeldung: 20.08.2025
(73) Patentinhaber: Bayerische Motoren Werke Aktiengesellschaft, 80809 München (DE)
(72) Erfinder: LAASCH, Felix, 80686 München (DE); HAERLE, Simon, 80809 München (DE)
(86) Internationale Anmeldenummer: PCT/EP2023/075245
(87) Internationale Veröffentlichungsnummer: WO 2024/078812

(56) Entgegenhaltungen:
- EP-A1- 3 968 440
- EP-A2- 3 525 280
- WO-A1-2019/221723
- US-A1- 2015 140 366
- US-A1- 2017 162 922
- US-A1- 2020 036 062

## Beschreibung

Elektrischer Energiespeicher für ein Kraftfahrzeug, insbesondere für einen Kraftwagen Die Erfindung betrifft einen elektrischen Energiespeicher für ein Kraftfahrzeug, insbesondere für einen Kraftwagen, gemäß dem Oberbegriff von Patentanspruch 1.

Der EP 2 795 713 B1 ist ein Batteriemodul als bekannt zu entnehmen, umfassend ein Batteriemodulgehäuse mit Teilen aus Kunststoff und mehrere prismatische Batteriezellen, die ein Zellgehäuse mit vier Seitenwänden aufweisen. Außerdem offenbart die JP 2018/536133 A1 ein Kühlsystem. Weitere Beispiele für Kühlsysteme von elektrischen Energiespeichern sind in US 2015 / 140 366 A1, US 2017 / 162 922 A1, WO 2019 / 221 723 A1, EP 3 525 280 A2, US 2012 / 045683 A1 und EP 3 968 440 A1 gezeigt.
Aufgabe der vorliegenden Erfindung ist es, einen elektrischen Energiespeicher für ein Kraftfahrzeug zu schaffen, sodass eine besonders vorteilhafte Temperierung, das heißt Kühlung und/oder Erwärmung, auf besonders vorteilhafte Weise realisiert werden kann. Diese Aufgabe wird erfindungsgemäß durch einen elektrischen Energiespeicher mit den Merkmalen des Patentanspruchs 1 gelöst. Vorteilhafte Ausgestaltungen der Erfindung sind Gegenstand der abhängigen Ansprüche.

Die Erfindung betrifft einen elektrischen Energiespeicher für ein einfach auch als Fahrzeug bezeichnetes Kraftfahrzeug, welches vorzugsweise als Kraftwagen, insbesondere als Personenkraftwagen, ausgebildet ist. Dies bedeutet, dass das vorzugsweise als Kraftwagen, insbesondere Personenkraftwagen, ausgebildete und einfach auch als Fahrzeug bezeichnete Kraftfahrzeug in seinem vollständig hergestellten Zustand den elektrischen Energiespeicher aufweist. Mittels des elektrischen Energiespeichers ist elektrische Energie, insbesondere elektrochemisch, zu speichern oder gespeichert. Hierfür weist der elektrische Energiespeicher Speicherzellen auf, in oder mittels welchen die elektrisch Energie, insbesondere elektrochemisch, gespeichert ist. Insbesondere sind die Speicherzellen elektrisch miteinander verbunden. Die Speicherzellen sind Einzelzellen, mithin separat voneinander ausgebildete Komponenten. Vorzugsweise ist der elektrische Energiespeicher eine Hochvolt-Komponente, deren elektrische Spannung, insbesondere elektrische Betriebs- oder Nennspannung, vorzugsweise größer als 50 Volt, insbesondere größer als 60 Volt, ist und ganz vorzugsweise mehrere hundert Volt beträgt. Vorzugsweise weist das Kraftfahrzeug in seinem vollständig hergestellten Zustand auch wenigstens eine elektrische Maschine auf, mittels welcher das Kraftfahrzeug, insbesondere rein, elektrisch angetrieben werden kann. Hierfür kann die elektrische Maschine mit der in dem Energiespeicher gespeicherten, elektrischen Energie versorgt werden. Ganz vorzugsweise ist die elektrische Maschine eine Hochvolt-Komponente, deren elektrische Spannung, insbesondere elektrische Betriebs- oder Nennspannung, vorzugsweise größer als 50 Volt, insbesondere größer als 60 Volt, ist und ganz vorzugsweise mehrere hundert Volt beträgt. Ganz insbesondere ist der elektrische Energiespeicher eine auch als Sekundärbatterie bezeichnete oder als Sekundärbatterie ausgebildete Batterie, welche insbesondere als Hochvolt-Batterie (HV-Batterie) ausgebildet sein kann. Somit sind die Speicherzellen vorzugsweise Batteriezelle oder die Speicherzellen werden auch als Batteriezellen bezeichnet.

Beispielsweise können die Speicherzellen als Rundzellen ausgebildet sein, welche außenumfangsseitig zylindrisch ausgebildet sind, mithin die Form eines geraden Kreiszylinders aufweisen. Die vorigen und folgenden Ausführungen sind selbstverständlich auch auf andere Speicherzellen wie beispielsweise außenumfangsseitig prismatische Speicherzellen übertragbar.

Der elektrische Energiespeicher weist auch mehrere, von einem vorzugsweise flüssigen Temperiermittel durchströmbare Temperierelemente auf, über welche die Speicherzellen mittels des Temperiermittels zu temperieren, das heißt zu kühlen und/oder zu erwärmen sind. Insbesondere ist das Temperiermittel eine Flüssigkeit, welche beispielsweise zumindest Wasser aufweisen oder umfassen kann. Insbesondere dann, wenn das Temperiermittel eine höhere Temperatur als die Speicherzellen aufweist, ist oder fungiert das Temperiermittel als ein Erwärmungsmittel, mittels welchem die Speicherzellen erwärmt werden. Hierfür erfolgt ein Wärmeübergang von dem Temperiermittel über die Temperierelemente an die Speicherzellen. Insbesondere dann, wenn das Temperiermittel eine geringere Temperatur als die Speicherzellen aufweist, ist oder fungiert das Temperiermittel als Kühlmittel, mittels welchem die Speicherzellen gekühlt werden. Hierfür erfolgt ein Wärmeübergang von den Speicherzellen über das jeweilige Temperierelement an oder auf das Temperiermittel.

Insbesondere sind die Temperierelemente separat voneinander ausgebildet und somit separat voneinander ausgebildete Einzelkomponenten. Insbesondere sind die Temperiermittel zumindest teilweise fluidisch voneinander getrennt. Hierunter kann insbesondere Folgendes verstanden werden: Das jeweilige Temperierelement weist beispielsweise wenigstens oder genau einen Temperierkanal auf, welcher von dem Temperiermittel durchströmbar ist. Beispielsweise ist der jeweilige Temperierkanal, insbesondere direkt, von einer jeweiligen, innenumfangsseitigen Mantelfläche des jeweiligen Temperierelements begrenzt. Dabei sind die Temperierkanäle zumindest teilweise fluidisch voneinander getrennt. Somit kann beispielsweise eine jeweilige Teilmenge oder ein jeweiliger Teilstrom des Temperiermittels durch den jeweiligen Temperierkanal und somit durch das jeweilige Temperierelement hindurchströmen, wobei insbesondere vorgesehen ist, dass die Teilmengen oder Teilströme, während sie durch die Temperierelemente, mithin durch den Temperierkanal strömen, nicht miteinander vermischt werden. Wieder mit anderen Worten ausgedrückt strömen beispielsweise die Teilmengen beziehungsweise Teilströme getrennt durch die Temperierkanäle und somit durch die Temperierelemente.

Um nun eine besonders vorteilhafte Temperierung auf besonders vorteilhafte Weise realisieren zu können, ist es erfindungsgemäß vorgesehen, dass der elektrische Energiespeicher ein den Temperierelementen gemeinsames und von dem Temperiermittel durchströmbares Verteilungselement aufweist, in welches jeweilige Anschlussstutzen der Temperierelemente eingesteckt sind. Hierdurch sind die Temperierelemente, mithin ihre Temperierkanäle, fluidisch mit dem Verteilungselement verbunden. Dadurch können die Temperierelemente über das Verteilungselement mit dem das Verteilungselement durchströmenden Temperiermittel aus dem Verteilungselement versorgt werden. Mit anderen Worten kann beispielsweise das Verteilungselement durchströmende Temperiermittel über die Anschlussstutzen aus dem Verteilungselement abgeführt und in die jeweiligen Temperierelemente eingeleitet werden, um dadurch die Temperierelemente mit dem Temperiermittel zu versorgen. Ferner ist es denkbar, dass dadurch, dass die Temperierelemente, mithin ihre Temperierkanäle, fluidisch mit dem Verteilungselement verbunden sind, dass die Temperierelemente durchströmende Temperiermittel aus den Temperierelementen abgeführt und insbesondere in das Verteilungselement eingeleitet werden. Mit anderen Worten kann beispielsweise das die Temperierelemente durchströmende Temperiermittel über die Anschlussstutzen aus den Temperierelementen abgeführt und in das Verteilungselement eingeleitet werden.

Insbesondere weist das Temperierelement einen von dem Temperiermittel durchströmbaren und den Temperierelementen gemeinsamen Verteilungskanal auf, welcher ein den Temperierkanälen gemeinsamer Verteilungskanal ist. In Strömungsrichtung des das Verteilungselement, mithin den Verteilungskanal, und die Temperierelemente, mithin die Temperierkanäle, durchströmenden und von dem Verteilungselement, mithin dem Verteilungskanal, in die Temperierelemente, mithin in die Temperierkanäle einströmenden Temperiermittels ist der Verteilungskanal stromauf der Temperierkanäle angeordnet, sodass das Temperiermittel auf seinem Weg zu den und in die Temperierelemente zunächst den Verteilungskanal und dann die Temperierkanäle und somit die Temperierelemente durchströmt. Dabei sind die Temperierkanäle von den zuvor genannten Teilmengen beziehungsweise Teilströmen durchströmbar. Beispielsweise bilden oder ergeben die Teilmengen beziehungsweise Teilströme in Summe eine Gesamtmenge oder einen Gesamtstrom des Temperiermittels, dessen Gesamtmenge beziehungsweise Gesamtstrom durch den Verteilungskanal und somit durch das Verteilungselement hindurchströmt. Mit anderen Worten, auf seinem Weg zu den und in die Temperierelemente, mithin zu den und in die Temperierkanäle, strömt zunächst der Gesamtstrom beziehungsweise die Gesamtmenge durch den Verteilungskanal und somit durch das Verteilungselement. Der Gesamtstrom wird in die Teilströme unterteilt, das heißt auf die Teilströme und somit auf die Anschlussstutzen und die Temperierelemente aufgeteilt, sodass der jeweilige Anschlussstutzen und somit das jeweilige Temperierelement von dem jeweiligen Teilstrom durchströmt wird. Insbesondere, nachdem die Teilströme beispielsweise die Temperierelemente durchströmt haben, werden die Teilströme beispielsweise wieder zusammengeführt und insbesondere vermischt, wodurch beispielsweise die Teilströme wieder den Gesamtstrom bilden, jedoch dann stromab der Temperierelemente.

Dadurch, dass die einfach auch als Stutzen bezeichneten Anschlussstutzen jeweils zumindest teilweise in das Verteilungselement eingesteckt sind, können auch große Toleranzen, insbesondere Lagetoleranzen, zwischen den einzelnen Temperierelementen und/oder zwischen dem jeweiligen, einzelnen Temperierelement und dem Verteilungselement ausgeglichen werden, sodass der elektrische Energiespeicher besonders einfach und somit zeit- und kostengünstig montiert, das heißt hergestellt werden kann. Im Rahmen einer Herstellung des Energiespeichers werden beispielsweise die Anschlussstutzen direkt in das Verteilungselement hineinragend positioniert, insbesondere dadurch, dass die Anschlussstutzen, insbesondere direkt, in das Verteilungselement eingesteckt werden und in der Folge eingesteckt sind. Insbesondere kann durch die Erfindung ein besonders Platz sparender Aufbau realisiert werden.

Insbesondere ist es vorgesehen, dass die Temperierelemente separat voneinander ausgebildet sind. Außerdem sind die Temperierelemente separat von dem Verteilungselement ausgebildet, sodass die Anschlussstutzen separat voneinander und separat von dem Verteilungselement ausgebildet sind. Der jeweilige, separat von dem Verteilungselement ausgebildete Anschlussstutzen ist dabei, insbesondere direkt, in das Verteilungselement eingesteckt, wodurch eine besonders einfache und somit zeit- und kostengünstig durchführbare Herstellung oder Montage des elektrischen Energiespeichers dargestellt werden kann.

Insbesondere kann durch die Erfindung und insbesondere durch den vorteilhaften Toleranzausgleich eine automatisierte Montage der Anschlussstutzen dargestellt werden, die beispielsweise bei der Montage automatisiert in das Verteilungselement eingesteckt werden.

Werden beispielsweise die Temperierelemente über die Anschlussstutzen mit dem Temperiermittel aus dem Verteilungselement versorgt, so strömt beispielsweise das Temperiermittel auf seinem Weg durch das Verteilungselement und zu den Anschlussstuzen entlang einer ersten oder in eine erste Strömungsrichtung durch das Verteilungselement, insbesondere durch den Verteilungskanal. Hierbei ist das Verteilungselement beziehungsweise der Verteilungskanal in Strömungsrichtung des Temperiermittels, das heißt entlang der ersten Strömungsrichtung betrachtet stromauf der Temperierelemente angeordnet. Wird jedoch beispielsweise das Temperiermittel über die Anschlussstutzen aus den Temperierelementen abgeführt, das heißt ausgeleitet, und in das Verteilungselement, insbesondere in den Verteilungskanal, eingeleitet, so strömt das Temperiermittel entlang einer oder in eine zweite Strömungsrichtung durch das Verteilungselement, insbesondere durch den Verteilungskanal. Hierbei ist das Verteilungselement beziehungsweise der Verteilungskanal in Strömungsrichtung des Temperiermittels, das heißt entlang der zweiten Strömungsrichtung betrachtet stromab der Temperierelemente angeordnet. Versorgen der Temperierelemente mit dem Temperiermittel aus dem Verteilungskanal wird auch als Versorgung der Temperierelemente bezeichnet. Das Abführen des Temperiermittels aus den Temperierelemente über die Anschlussstutzen in das Verteilungselement, insbesondere in den Verteilungskanal, wird auch Entsorgen oder Entsorgung der Temperierelemente bezeichnet.

Des Weiteren ist es erfindungsgemäß vorgesehen, dass das Verbindungselement den den Temperierelementen gemeinsamen und von dem Temperiermittel durchströmbaren Verteilungskanal und je Temperierelement wenigstens oder genau eine von dem Temperiermittel aus dem Verteilungskanal durchströmbare Durchströmöffnung aufweist. Wird das Verteilungselement zur Versorgung der Temperierelemente verwendet, so ist die jeweilige, von dem Temperiermittel durchströmbare Durchströmöffnung eine Austrittsöffnung, die in Strömungsrichtung des Temperiermittels, das heißt entlang der ersten Strömungsrichtung betrachtet stromab des Verteilungskanals angeordnet ist. Wird das Verteilungselement zur Entsorgung der Temperierelemente verwendet, so ist die jeweilige, von dem Temperiermittel durchströmbare Durchströmöffnung in Strömungsrichtung des Temperiermittels, das heißt entlang der zweiten Strömungsrichtung betrachtet stromauf des Verteilungskanals angeordnet.

In die jeweilige Durchströmöffnung ist der jeweilige Anschlussstutzen des jeweiligen Temperierelements eingesteckt. Bei der Versorgung der Temperierelemente kann über die jeweilige Durchströmöffnung das Temperiermittel aus dem Verteilungskanal abgeführt und in das jeweilige Temperierelement, insbesondere in den jeweiligen Temperierkanal, eingeführt, das heißt eingeleitet werden. Bei der Entsorgung der Temperierelemente kann über die jeweilige Durchströmöffnung das Temperiermittel aus dem jeweiligen Temperierelement, insbesondere aus dem jeweiligen Temperierkanal, abgeführt und in das Verteilungselement, insbesondere in den Verteilungskanal, eingeleitet werden.

Vorzugsweise sind die Durchströmöffnungen voneinander getrennt. Hierunter ist zu verstehen, dass zwischen den Durchströmöffnungen jeweilige, insbesondere als Festkörper ausgebildete Wandungsbereiche des Verteilungselements angeordnet sind. Beispielsweise sind die Durchströmöffnungen kreisrund ausgebildet. Bei dieser Ausführungsform kann eine besonders vorteilhafte Montage des elektrischen Energiespeichers realisiert werden.

Um die Temperierelemente an dem Verteilungselement und somit dem Energiespeicher insgesamt besonders vorteilhaft montieren zu können, ist es außerdem vorgesehen, dass der jeweilige Anschlussstutzen zumindest teilweise in den Verteilungskanal hineinragt. Mit anderen Worten ist es vorzugsweise vorgesehen, dass der jeweilige Anschlussstutzen insbesondere entlang seiner Längserstreckungsrichtung so weit oder so tief in die Durchströmöffnung und somit in das Verteilungselement eingesteckt ist, dass der jeweilige Anschlussstutzen zumindest teilweise in den Verteilungskanal hineinragt. Somit ist es insbesondere denkbar, dass der Anschlussstutzen auf einer ersten, in dem Verteilungskanal angeordneten Seite der Durchströmöffnung aus der Durchströmöffnung herausragt und somit in das Verteilungselement und insbesondere in den Verteilungskanal hineinragt, und beispielsweise auf einer der ersten Seite gegenüberliegenden, zweiten Seite der Durchströmöffnung ragt der Anschlussstutzen aus der Durchströmöffnung und insbesondere aus dem Verteilungselement heraus und ist dadurch an einer Umgebung des Verteilungselements angeordnet, wodurch eine besonders vorteilhafte Montage dargestellt werden kann.

Eine weitere Ausführungsform zeichnet sich dadurch aus, dass der jeweilige Anschlussstutzen einen jeweiligen, in dem Verteilungskanal angeordneten Wandungsbereich des Verteilungselements hintergreift, wodurch der jeweilige Anschlussstutzen an dem Verteilungselement gehalten, mithin mechanisch mit dem Verteilungselement verbunden ist. Dadurch kann eine besonders vorteilhafte Montage realisiert werden, insbesondere derart, dass der jeweilige Anschlussstutzen so weit oder so tief in die jeweilige Durchströmöffnung hineingesteckt wird, bis der jeweilige Anschlussstutzen den jeweiligen Wandungsbereich hintergreift, das heißt hinterhakt. Dadurch kann auf besonders einfache und somit zeit- und kostengünstige Weise eine besonders sichere, mechanische Halterung des jeweiligen Anschlussstutzens an dem Verteilungselement gewährleistet werden.

Bei einer weiteren, besonders vorteilhaften Ausführungsform der Erfindung ist es vorgesehen, dass der jeweilige Anschlussstutzen an seinem jeweiligen, dem Verteilungskanal zugewandten und insbesondere freien Ende eine jeweilige Einführschräge aufweist, welche schräg zu einer Steckrichtung verläuft, in welcher der jeweilige Anschlussstutzen in die jeweilige Durchströmöffnung eingesteckt ist. Beispielsweise erstreckt sich die jeweilige Einführschräge in einer jeweiligen Ebene, welche schräg zur Steckrichtung verläuft, oder die Einführschräge ist beispielsweise konisch ausgebildet. Dadurch kann der jeweilige Anschlussstutzen besonders einfach in die jeweilige Durchströmöffnung eingesteckt werden, sodass eine besonders einfache und somit zeit- und kostengünstige Montage darstellbar ist.

Um Toleranzen besonders vorteilhaft ausgleichen und in der Folge eine besonders vorteilhafte Montage realisieren zu können, ist es in weiterer Ausgestaltung der Erfindung vorgesehen, dass die jeweilige Durchströmöffnung in einem jeweiligen, ersten Längenbereich des Verteilungselements ausgebildet ist. Entlang einer beispielsweise als Längserstreckungsrichtung ausgebildeten Erstreckungsrichtung des Verteilungselements betrachtet ist zwischen jeweils zwei der ersten Längenbereiche ein jeweiliger, zweiter Längenbereich des Verteilungselements angeordnet. Dabei ist der jeweilige, zweite Längenbereich entlang der Erstreckungsrichtung elastisch verformbar ausgebildet. Dadurch können insbesondere entlang der Erstreckungsrichtung betrachtet Toleranzen, insbesondere Lage- beziehungsweise Positionstoleranzen besonders vorteilhaft und einfach ausgeglichen, das heißt kompensiert, werden.

Um Toleranzen, insbesondere Lagetoleranzen, besonders vorteilhaft und einfach ausgleichen, das heißt kompensieren, zu können, ist es in weiterer Ausgestaltung der Erfindung vorgesehen, dass der jeweilige, zweite Längenbereich als ein Faltenbalg ausgebildet ist.

In weiterer, besonders vorteilhafter Ausgestaltung der Erfindung ist es vorgesehen, dass der jeweilige, erste Längenbereich aus einem ersten Werkstoff und der jeweilige, zweite Längenbereich aus einem gegenüber dem ersten Werkstoff weicheren und/oder elastischeren, zweiten Werkstoff gebildet sind. Hierdurch kann beispielsweise eine Länge des Verteilungselements entlang der Erstreckungsrichtung besonders vorteilhaft eingestellt werden, insbesondere ohne dass es zu Beschädigungen des Verteilungselements kommt. Dadurch können Toleranzen besonders vorteilhaft ausgeglichen werden.

Bei dem ersten Werkstoff und dem zweiten Werkstoff handelt es sich beispielsweise um einen jeweiligen Kunststoff. Dabei ist es insbesondere denkbar, dass das Verteilungselement durch Spritzgießen, insbesondere durch Kunststoff-Spritzgießen, hergestellt ist. Ganz vorzugsweise ist das Verteilungselement als ein Zwei-Komponenten-Kunststoffteil, insbesondere als ein Zwei-Komponenten-Spritzgussteil, ausgebildet, wobei das Verteilungselement auch als Zwei-K-Kunststoffteil bezeichnet wird. Bei einer Herstellung des Verteilungselements wird beispielsweise zunächst ein erster Teil des Verteilungselements, insbesondere durch Spritzgießen, hergestellt, woraufhin beispielsweise ein zweiter Teil des Verteilungselements an den ersten Teil angespritzt wird, insbesondere durch Spritzgießen. Dabei werden beispielsweise der erste Teil aus einem der Kunststoffe beziehungsweise aus einem der Werkstoffe und der zweite Teil aus dem anderen Kunststoff beziehungsweise Werkstoff hergestellt. Somit ist in vollständig hergestelltem Zustand des Verteilungselements der zweite Teil an dem ersten Teil angespritzt. Beispielsweise sind der erste Teil aus dem ersten Werkstoff und der zweite Teil aus dem zweiten Werkstoff gebildet.

Um auf eine vorteilhafte und einfache Weise eine vorteilhafte Temperierung realisieren zu können, ist es Erfindungsgemäß vorgesehen, dass das Verteilungselement wenigstens ein Drosselelement aufweist, mittels welchem ein Teilbereich eines von dem Temperiermittel durchströmbaren Strömungsquerschnitts wenigstens eines der Anschlussstutzen überlappt und dadurch fluidisch versperrt ist. Dies bedeutet, dass der eine Anschlussstutzen insbesondere gegenüber wenigstens einem anderen der Anschlussstutzen angedrosselt ist. Dadurch kann insbesondere bei der Versorgung und/oder bei der Entsorgung der Temperierelemente eine besonders vorteilhafte Aufteilung oder Verteilung des Temperiermittels auf die Temperierelemente realisiert werden, sodass eine zumindest im Wesentlichen gleichmäßige, das heißt homogene Temperierung der Speicherzellen darstellbar ist. Insbesondere ist es denkbar, dass der angedrosselte, eine Anschlussstutzen in Strömungsrichtung des den Verteilungskanal durchströmenden Temperiermittels stromauf des anderen, insbesondere nicht oder weniger stark angedrosselten Anschlussstutzens angeordnet ist, insbesondere bei der Versorgung, sodass eine zumindest im Wesentlichen gleichmäßige Temperierung darstellbar ist. Das Drosselelement ist oder fungiert als eine Drossel, um eine vorteilhafte Verteilung oder Aufteilung des Temperiermittels auf die Anschlussstutzen und somit auf die Temperierelemente realisieren zu können.

Dadurch, dass der jeweilige, erste Längenbereich aus dem ersten Werkstoff gebildet ist, kann eine vorteilhafte Stabilität, das heißt Festigkeit oder Steifigkeit, des jeweiligen, ersten Längenbereichs realisiert werden, sodass beispielsweise der jeweilige Anschlussstutzen besonders vorteilhaft in die jeweilige Durchströmöffnung eingesteckt werden kann. Insbesondere kann hierdurch eine besonders vorteilhafte Stabilität oder Robustheit des jeweiligen, ersten Längenbereichs gegenüber einem radialen Druck gewährleistet werden, sodass insbesondere eine automatisierte Montage darstellbar ist. Bei der automatisierten Montage werden beispielsweise die Anschlussstutzen automatisiert, das heißt automatisch und dabei beispielsweise mittels eines Roboters in die Durchströmöffnungen eingesteckt.

Schließlich hat es sich zur Realisierung einer besonders vorteilhaften Temperierung als besonders vorteilhaft gezeigt, wenn das Verteilungselement ein erstes Material und ein gegenüber dem ersten Material weicheres und/oder elastischer verformbares, zweites Material aufweist. Bei dem zweiten Material kann es sich um den zweiten Werkstoff handeln. Alternativ oder zusätzlich kann es sich bei dem ersten Material um den ersten Werkstoff handeln. Dabei ist mittels des zweiten Materials der jeweilige Anschlussstutzen gegen das Verteilungselement abgedichtet. Hierdurch kann beispielsweise eine druckunterstützte Dichtung realisiert werden. Dabei hat es sich als vorteilhaft gezeigt, wenn, wie zuvor beschrieben, das Verteilungselement als Zwei-Komponenten-Kunststoffteil ausgebildet ist, welches durch Spritzgießen und dabei aus den Materialien hergestellt ist. Dabei sind beispielsweise das zweite Material und das erste Material angespritzt. Insbesondere ist es denkbar, dass das zweite Material, insbesondere ihr Anschlussstutzen, ein jeweiliges, beispielsweise als Dichtlippe ausgebildetes Dichtungselement bildet, mittels welchem der jeweilige Anschlussstutzen besonders vorteilhaft gegen das Verteilungselement abgedichtet ist.

Als ferner besonders vorteilhaft hat es sich gezeigt, wenn der jeweilige Anschlussstutzen eine jeweilige Stufe aufweist, um beispielsweise eine unerwünschte Ablösung oder Trennung von dem Verteilungselement zu vermeiden und/oder Trennkräfte aus einem Fluiddruck, insbesondere des Temperiermittels, aufzunehmen.

Weitere Einzelheiten der Erfindung ergeben sich aus der nachfolgenden Beschreibung bevorzugter Ausführungsbeispiele mit den zugehörigen Zeichnungen. Dabei zeigt:
- Fig. 1: ausschnittsweise eine schematische Schnittansicht eines elektrischen Energiespeichers für ein Kraftfahrzeug gemäß einer ersten Ausführungsform;
- Fig. 2: ausschnittsweise eine weitere, schematische Schnittansicht des elektrischen Energiespeichers gemäß der ersten Ausführungsform; und
- Fig. 3: ausschnittsweise eine schematische Schnittansicht einer zweiten Ausführungsform des elektrischen Energiespeichers.

In den Fig. sind gleiche oder funktionsgleiche Elemente mit gleichen Bezugszeichen versehen.

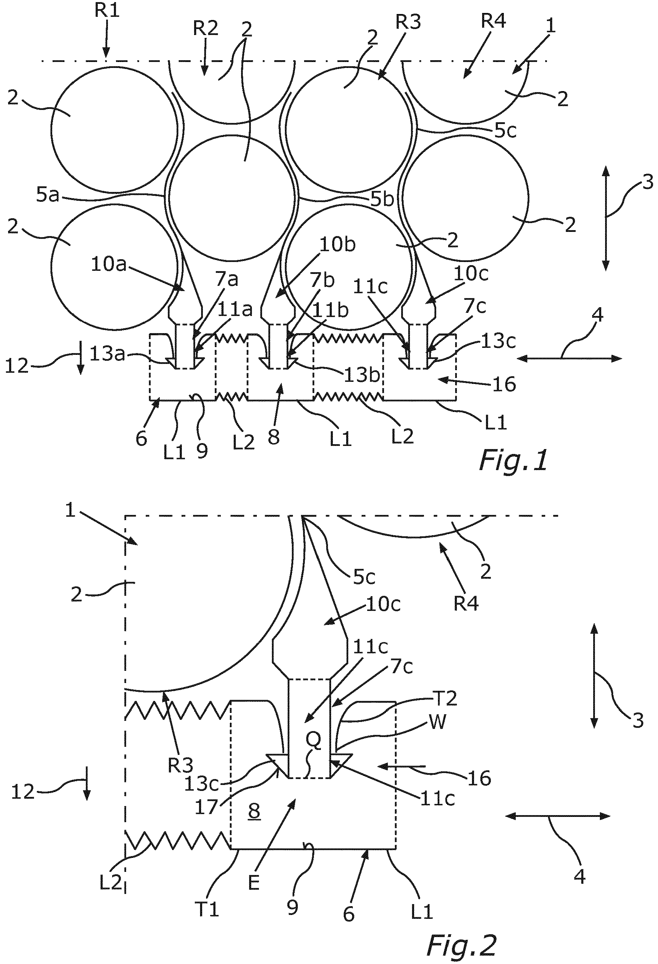

Fig. 1 und 2 zeigen jeweils ausschnittsweise in einer schematischen Schnittansicht eine erste Ausführungsform eines einfach auch als Energiespeicher bezeichneten, elektrischen Energiespeichers 1 für ein einfach auch als Fahrzeug bezeichnetes Kraftfahrzeug. Der elektrische Energiespeicher 1 weist mehrere Speicherzellen 2 auf, welche bei dem in den Fig. gezeigten Ausführungsbeispiel als Rundzellen ausgebildet sind. Es ist erkennbar, dass die Speicherzellen 2 in Reihen angeordnet sind, sodass vorliegend erste der Speicherzellen 2 eine erste Zellreihe R1, zweite der Speicherzellen 2 eine zweite Zellreihe R2, dritte der Speicherzellen 2 eine dritte Zellreihe R3 und vierte der Speicherzellen 2 eine vierte Zellreihe R4 bilden. Die jeweiligen, die jeweilige Zellreihe R1-4 bildenden Speicherzellen 2 sind entlang einer durch einen Doppelpfeil 3 veranschaulichten, ersten Richtung aufeinanderfolgend, das heißt hintereinander, angeordnet, wobei die Zellreihen R1-4 entlang einer senkrecht zur ersten Richtung verlaufenden und durch einen Doppelpfeil 4 veranschaulichten, zweiten Richtung nebeneinander und somit aufeinanderfolgend angeordnet sind.

Der elektrische Energiespeicher 1 umfasst auch mehrere Temperierelemente 5a-c. Es ist erkennbar, dass die Temperierelemente 5a-c entlang der zweiten Richtung (Doppelpfeil 4) aufeinanderfolgend angeordnet sind, vorliegend derart, dass das Temperierelement 5a entlang der zweiten Richtung zwischen den Zellreihen R1 und R2, das Temperierelement 5b entlang der zweiten Richtung zwischen den Zellreihen R2 und R3 und das Temperierelement 5c entlang der zweiten Richtung zwischen den Zellreihen R3 und R4 angeordnet sind. Das jeweilige Temperierelement 5a-c ist von einem vorzugsweise flüssigen und somit vorzugsweise als Flüssigkeit ausgebildeten Temperiermittel durchströmbar, wobei das Temperiermittel Bestandteil des Energiespeichers 1 sein kann. Es ist erkennbar, dass das jeweilige Temperierelement 5a-c in einer durch die erste Richtung und durch die zweite Richtung aufgespannten Ebene betrachtet wellenförmig ausgebildet ist. Dadurch kann sich das Temperierelement 5a-c besonders vorteilhaft und insbesondere besonders flächig an die jeweilige Speicherzelle 2 anschmiegen, sodass eine besonders vorteilhafte Temperierung, das heißt Kühlung und/oder Erwärmung der jeweiligen Speicherzelle 2, über das jeweilige Temperierelement 5a-c mittels des jeweiligen, das jeweilige Temperierelement 5a-c durchströmenden Temperiermittels darstellbar ist. Insbesondere sind die Temperierelemente 5a-c in einem von dem Temperiermittel durchströmbaren Temperierkreislauf des elektrischen Energiespeichers 1 angeordnet. Die Temperierelemente 5a-c sind separat von den Speicherzellen 2 und separat voneinander ausgebildet.

Um nun auf besonders vorteilhafte Weise eine besonders vorteilhafte Temperierung der Speicherzellen 2 realisieren zu können, weist der Energiespeicher 1 ein den Temperierelementen 5a-c gemeinsames, separat von den Speicherzellen 2 und separat von den Temperierelementen 5a-c ausgebildetes Verteilungselement 6 auf, welches auch als Verteilungsrohr bezeichnet wird oder als ein Verteilungsrohr ausgebildet ist.

Das Verteilungselement 6 ist ein den Temperierelementen 5a-c gemeinsames und von dem vorzugsweise flüssigen Temperiermittel durchströmbares Verteilungselement, in welches jeweilige Anschlussstutzen 7a-c des jeweiligen Temperierelements 5a-c eingesteckt sind. Hierdurch sind die Temperierelemente 5a-c zumindest fluidisch mit dem Verteilungselement 6 verbunden, sodass das zunächst das Verteilungselement 6 durchströmende Temperiermittel die Anschlussstutzen 7a-c durchströmen und somit aus dem Verteilungselement 6 ausströmen, in die Temperierelemente 5a-c einströmen und in der Folge die Temperierelemente 5a-c durchströmen kann. Somit sind die Temperierelemente 5a-c über das Verteilungselement 6 mit dem das Verteilungselement 6 durchströmende Temperiermittel aus dem Verteilungselement 6 versorgbar. Somit wird bei dem in den Figuren gezeigten Ausführungsbeispiel das Verteilungselement 6 für eine Versorgung der Temperierelemente 5a-c mit dem Temperiermittel verwendet.

Es ist erkennbar, dass das Verteilungselement 6, insbesondere in seinem Inneren, einen Verteilungskanal 8 aufweist, welcher ganz insbesondere von einer innenumfangsseitigen Mantelfläche 9 des Verteilungselements 6, insbesondere direkt, begrenzt ist. Dabei weist das jeweilige Temperierelement 5a-c einen jeweiligen Temperierkanal 10a-c auf, welcher von dem jeweiligen, den jeweiligen Anschlussstutzen 7a-c durchströmenden Temperiermittel durchströmbar ist. Dem jeweiligen Anschlussstutzen 7a-c ist eine jeweilige, vorliegend als Austrittsöffnung 11a-c ausgebildete Durchströmöffnung des Verteilungselements 6 zugeordnet, wobei der jeweilige Anschlussstutzen 7a-c in die jeweilige, ihm zugeordnete Austrittsöffnung 11a-c des Verteilungselements 6 eingesteckt ist, insbesondere entlang einer Steckrichtung, welche in Fig. 1 durch einen Pfeil 12 veranschaulicht ist. Die Steckrichtung verläuft dabei in oder parallel zu der durch die erste Richtung und die zweite Richtung aufgespannten Ebene. Beispielsweise verläuft die Steckrichtung parallel zu der ersten Richtung (Doppelpfeil 3).

Der jeweilige Anschlussstutzen 7a-c ist entlang der Steckrichtung so tief oder so weit in die jeweilige Austrittsöffnung 11a-c eingesteckt, dass der jeweilige Anschlussstutzen 7a-c zumindest teilweise in den Verteilungskanal 8 hineinragt, mithin in dem Verteilungskanal 8 angeordnet ist. Dies ist besonders gut aus Fig. 2 erkennbar.

Besonders gut aus Fig. 2 ist erkennbar, dass der jeweilige Anschlussstutzen 7a-c einen jeweiligen, in dem Verteilungskanal 8 angeordneten Wandungsbereich W des Verteilungselements 6 hintergreift, insbesondere entlang der Steckrichtung betrachtet. Hierdurch ist der jeweilige Anschlussstutzen 7a-c auch mechanisch mit dem Verteilungselement 6 verbunden, mithin an dem Verteilungselement 6 gehalten. Hierfür weist der jeweilige Anschlussstutzen 7a-c einen jeweiligen Kragen 13a-c auf, welcher den je n Wandungsbereich W hintergreift, mithin hinterhakt. Außerdem weist der jeweilige Anschlussstutzen 7a-c an seinem jeweiligen, dem Verteilungskanal 8 zugewandten und insbesondere freien Ende E eine beispielsweise konusförmige Einführschräge 14 auf, welche schräg zur Steckrichtung verläuft. Vorliegend ist die jeweilige Einführschräge 14 durch den jeweiligen Kragen 13a-c gebildet. Bei dem Einstecken des jeweiligen Anschlussstutzens 7a-c in das Verteilungselement 6, insbesondere in die jeweilige Austrittsöffnung 11a-c, gleitet die Einführschräge 13a-c vorteilhaft an dem Verteilungselement 6 ab, wodurch der jeweilige Anschlussstutzen 7a-c besonders einfach und somit zeit- und kostengünstig in das Verteilungselement 6 eingesteckt werden kann.

Die jeweilige Austrittsöffnung 11a-c ist an einem jeweiligen, ersten Längenbereich L1 des Verteilungselements 6 ausgebildet. Entlang einer durch den Doppelpfeil 4 veranschaulichten und vorliegend als Längserstreckungsrichtung ausgebildeten Erstreckungsrichtung des Verteilungselements 6, welches entlang der Erstreckungsrichtung länglich ausgebildet ist, ist zwischen jeweils zwei der ersten Längenbereiche L1 des Verteilungselements 6 ein jeweiliger, zweiter Längenbereich L2 des Verteilungselements 6 angeordnet. Der jeweilige, zweite Längenbereich L2 ist entlang der durch den Doppelpfeil 4 veranschaulichten Erstreckungsrichtung elastisch verformbar ausgebildet, vorliegend beispielsweise derart, dass der jeweilige, zweite Längenbereich L2 als ein Faltenbalg ausgebildet ist. Zusätzlich ist es vorliegend vorgesehen, dass zumindest ein erster Teil T1 des jeweiligen, ersten Längenbereichs L1 aus einem ersten Werkstoff gebildet ist, welcher auch als erstes Material bezeichnet wird. Der jeweilige, zweite Längenbereich L2 ist aus einem zweiten Werkstoff gebildet, welcher auch als zweites Material bezeichnet wird. Dabei ist das zweite Material weicher als das erste Material, sodass das zweite Material elastischer verformbar ist als das erste Material. Ein jeweiliger, zweiter Teil T2 des jeweiligen, ersten Längenbereichs L1 ist aus dem zweiten Material gebildet, wobei es bei der ersten Ausführungsform vorgesehen ist, dass die jeweilige Austrittsöffnung 11a-c, insbesondere direkt, durch das zweite Material begrenzt ist. Dadurch ist oder bildet der jeweilige, zweite Teil T2 des jeweiligen, ersten Längenbereichs L1 ein jeweiliges Dichtungselement, welches sich besonders vorteilhaft an den jeweiligen Anschlussstutzen 7a-c, insbesondere an eine jeweilige, außenumfangsseitige Mantelfläche 14 des jeweiligen Anschlussstutzens 7a-c, anschmiegen kann, sodass der jeweilige Anschlussstutzen 7a-c mittels des jeweiligen, zweiten Teils T2 besonders vorteilhaft gegen das Verteilungselement 6 abgedichtet ist.

Die Teile T1 und T2 sowie die Längenbereiche L1 und L2 sind vorzugsweise einstückig miteinander ausgebildet. Vorzugsweise ist es vorgesehen, dass das erste Material und das zweite Material jeweilige Kunststoffe sind. Mit anderen Worten können das erste Material ein erster Kunststoff und das zweite Material ein zweiter Kunststoff sein. Somit ist es denkbar, dass das Verteilungselement 6 als ein Zwei-Komponenten-Kunststoffteil ausgebildet ist, wobei das Verteilungselement 6 insbesondere durch Spritzgießen hergestellt ist. Bei einer Herstellung des Verteilungselements 6 werden somit beispielsweise die Materialien aneinander gespritzt, insbesondere derart, dass das zweite Material und das erste Material angespritzt werden. Dadurch kann eine einfache und somit zeit- und kostengünstige Herstellung des Verteilungselements 6 realisiert werden.

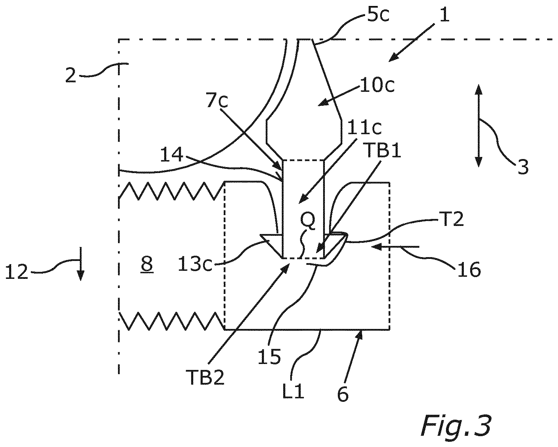

Fig. 3 zeigt ausschnittsweise in einer schematischen Schnittansicht eine zweite Ausführungsform des Energiespeichers 1. Bei der zweiten Ausführungsform weist das Verteilungselement 6 wenigstens ein Drosselelement 15 auf. Bei der zweiten Ausführungsform ist das Drosselelement 15 durch den zweiten Teil T2 eines der Längenbereiche L1 gebildet, sodass das Drosselelement 15 aus dem zweiten Material gebildet ist. Aus Fig. 3 ist erkennbar, dass das Drosselelement 15 einen ersten Teilbereich TB1 eines von dem Temperiermittel durchströmbaren Strömungsquerschnitts Q des Anschlussstutzens 7c überlappt und dadurch fluidisch versperrt, wobei ein sich insbesondere direkt an den ersten Teilbereich TB1 anschließender, zweiter Teilbereich TB2 des Strömungsquerschnitts Q freigegeben und somit von dem Temperiermittel durchströmbar ist.

In Fig. 3 ist durch einen Pfeil 16 eine Strömungsrichtung veranschaulicht, in die das Temperiermittel auf seinem Weg durch das Verteilungselement 6 und zu den Anschlussstutzen 7a-c durch den Verteilungskanal 8 und somit durch das Verteilungselement 6 hindurchströmt. Bezogen auf diese Strömungsrichtung sind die Austrittsöffnungen 11a-c stromab des Verteilungskanals 8 angeordnet. Es ist erkennbar, dass bezogen auf die durch den Pfeil 16 veranschaulichte Strömungsrichtung des Temperiermittels der Anschlussstutzen 7c, dessen Strömungsquerschnitt Q durch das Drosselelement 15 teilweise versperrt und somit angedrosselt ist, stromauf der anderen Anschlussstutzen 7a und 7b angeordnet ist, deren Strömungsquerschnitte Q beispielsweise nicht oder weniger stark angedrosselt sind als der Strömungsquerschnitt Q des Anschlussstutzens 7c. Dadurch kann eine zumindest im Wesentlichen gleichmäßige Verteilung oder Aufteilung des Temperiermittels aus dem Verteilungskanal 8 auf oder in die Anschlussstutzen 7a-c und somit auf oder in die Temperierelemente 5a-c realisiert werden, sodass eine zumindest im Wesentlichen gleichmäßige und mithin homogene Temperierung der Speicherzellen 2, insbesondere der Zellreihen R1-4, darstellbar ist.

### Bezugszeichenliste

- 1: elektrischer Energiespeicher
- 2: Speicherzelle
- 3: Doppelpfeil
- 4: Doppelpfeil
- 5a-c: Temperierelement
- 6: Verteilungselement
- 7a-c: Anschlussstutzen
- 8: Verteilungskanal
- 9: innenumfangsseitige Mantelfläche
- 10a-c: Temperierkanal
- 11a-c: Austrittsöffnung
- 12: Pfeil
- 13a-c: Kragen
- 14: außenumfangsseitige Mantelfläche
- 15: Drosselelement
- 16: Pfeil
- E: Ende
- L1: erster Längenbereich
- L2: zweiter Längenbereich
- Q: Strömungsquerschnitt
- R1-4: Zellreihe
- T1: erster Teil
- T2: zweiter Teil
- TB1: erster Teilbereich
- TB2: zweiter Teilbereich

## Patentansprüche

1. Elektrischer Energiespeicher (1) für ein Kraftfahrzeug, mit mehreren Speicherzellen (2) zum Speichern von elektrischer Energie, mit mehreren, von einem Temperiermittel durchströmbaren Temperierelementen (5a-c), über welche die Speicherzellen (2) mittels des Temperiermittels zu temperieren sind,
und einem den Temperierelementen (5a-c) gemeinsamen und von dem Temperiermittel durchströmbaren Verteilungselement (6), in welches jeweilige Anschlussstutzen (7a-c) der Temperierelemente (5a-c) eingesteckt sind, wodurch die Temperierelemente (5a-c) mit dem Verteilungselement (6) fluidisch verbunden sind, wobei das Verteilungselement (6) aufweist:
- einen den Temperierelementen (5a-c) gemeinsamen und von dem Temperiermittel durchströmbaren Verteilungskanal (8); und
- je Temperierelement (5a-c) wenigstens oder genau eine von dem Temperiermittel durchströmbare Durchströmöffnung (11a-c), in welche der jeweilige Anschlussstutzen (7a-c) des jeweiligen Temperierelements (5a-c) eingesteckt ist, und wobei der jeweilige Anschlussstutzen (7a-c) zumindest teilweise in den Verteilungskanal (8) hineinragt,
**dadurch gekennzeichnet, dass**
das Verteilungselement (6) wenigstens ein Drosselelement (15) aufweist, mittels welchem ein Teilbereich (TB1) eines von dem Temperiermittel durchströmbaren Strömungsquerschnitts (Q) wenigstens eines der Anschlussstutzen (7a-c) überlappt und dadurch fluidisch versperrt ist.

2. Elektrischer Energiespeicher (1) nach Anspruch 1,
**dadurch gekennzeichnet, dass**
der jeweilige Anschlussstutzen (7a-c) einen jeweiligen, in dem Verteilungskanal (8) angeordneten Wandungsbereich (W) des Verteilungselements (6) hintergreift, wodurch der jeweilige Anschlussstutzen (7a-c) an dem Verteilungselement (6) gehalten ist.

3. Elektrischer Energiespeicher (1) nach Anspruch 1 oder 2,
**dadurch gekennzeichnet, dass**
der jeweilige Anschlussstutzen (7a-c) an seinem jeweiligen, dem Verteilungskanal (8) zugewandten Ende (E) eine jeweilige Einführschräge (17) aufweist, welche schräg zu einer Steckrichtung (12) verläuft, in welche der jeweilige Anschlussstutzen (7a-c) in die jeweilige Durchströmöffnung (11a-c) eingesteckt ist.

4. Elektrischer Energiespeicher (1) nach einem der vorhergehenden Ansprüche,
**dadurch gekennzeichnet, dass**
die jeweilige Durchströmöffnung (11a-c) in einem jeweiligen, ersten Längenbereich (L1) des Verteilungselements (6) angeordnet ist, wobei entlang einer Erstreckungsrichtung (4) des Verteilungselements (6) betrachtet zwischen jeweils zwei der ersten Längenbereiche (L1) ein jeweiliger, zweiter Längenbereich (L2) des Verteilungselements (6) angeordnet ist, dessen jeweiliger, zweiter Längenbereich (L2) entlang der Erstreckungsrichtung (4) elastisch verformbar ausgebildet ist.

5. Elektrischer Energiespeicher (1) nach Anspruch 4,
**dadurch gekennzeichnet, dass**
der jeweilige, zweite Längenbereich (L2) als ein Faltenbalg ausgebildet ist.

6. Elektrischer Energiespeicher (1) nach Anspruch 4 oder 5,
**dadurch gekennzeichnet, dass**
der jeweilige, erste Längenbereich (L1) zumindest teilweise aus einem ersten Werkstoff und der jeweilige, zweite Längenbereich (L2) aus einem gegenüber dem ersten Werkstoff weicheren und/oder elastischeren, zweiten Werkstoff gebildet ist.

7. Elektrischer Energiespeicher (1) nach einem der vorhergehenden Ansprüche,
**dadurch gekennzeichnet, dass**
das Verteilungselement (6) ein erstes Material und ein gegenüber dem ersten Material weicheres und/oder elastischer verformbares, zweites Material aufweist, mittels welchem der jeweilige Anschlussstutzen (7a-c) gegen das Verteilungselement (6) abgedichtet ist.

## Claims

1. Electrical energy storage device (1) for a motor vehicle, comprising a plurality of storage cells (2) for storing electrical energy, comprising a plurality of temperature control elements (5a-c) through which a temperature control medium can flow, via which the storage cells (2) are to be temperature-controlled by means of the temperature control medium,
and a distribution element (6) which is common to the temperature control elements (5a-c) and through which the temperature control medium can flow, into which respective connection stubs (7a-c) of the temperature control elements (5a-c) are inserted, whereby the temperature control elements (5a-c) are fluidically connected to the distribution element (6),
wherein the distribution element (6) comprises:
- a distribution channel (8) which is common to the temperature control elements (5a-c) and through which the temperature control medium can flow; and
- per temperature control element (5a-c) at least one or exactly one flow-through opening (11a-c) through which the temperature control medium can flow, into which the respective connection stub (7a-c) of the respective temperature control element (5a-c) is inserted, and
wherein the respective connection stub (7a-c) projects at least partially into the distribution channel (8),
**characterized in that**
the distribution element (6) comprises at least one throttle element (15), by means of which a partial region (TB1) of a flow cross section (Q), through which the temperature control medium can flow, of at least one of the connection stubs (7a-c) is overlapped and thereby fluidically blocked.

2. Electrical energy storage device (1) according to claim 1,
**characterized in that**
the respective connection stub (7a-c) engages behind a respective wall region (W), arranged in the distribution channel (8), of the distribution element (6), whereby the respective connection stub (7a-c) is held on the distribution element (6).

3. Electrical energy storage device (1) according to claim 1 or 2,
**characterized in that**
the respective connection stub (7a-c), at its respective end (E) facing the distribution channel (8), comprises a respective insertion bevel (17), which extends obliquely to an insertion direction (12), in which the respective connection stub (7a-c) is inserted into the respective flow-through opening (11a-c).

4. Electrical energy storage device (1) according to one of the preceding claims,
**characterized in that**
the respective flow-through opening (11a-c) is arranged in a respective first length region (L1) of the distribution element (6), wherein, viewed along an extension direction (4) of the distribution element (6), a respective second length region (L2) of the distribution element (6) is arranged between respective two of the first length regions (L1), the respective second length region (L2) of which is designed to be elastically deformable along the extension direction (4).

5. Electrical energy storage device (1) according to claim 4,
**characterized in that**
the respective second length region (L2) is designed as a bellows.

6. Electrical energy storage device (1) according to claim 4 or 5,
**characterized in that**
the respective first length region (L1) is formed at least partially from a first material and the respective second length region (L2) is formed from a second material which is softer and/or more elastic than the first material.

7. Electrical energy storage device (1) according to one of the preceding claims,
**characterized in that**
the distribution element (6) comprises a first material and a second material which is softer and/or more elastically deformable than the first material, by means of which the respective connection stub (7a-c) is sealed against the distribution element (6).

## Revendications

1. Accumulateur d'énergie électrique (1) pour un véhicule automobile, comprenant plusieurs cellules de stockage (2) destinées à stocker de l'énergie électrique, comprenant plusieurs éléments de régulation thermique (5a-c) pouvant être traversés par un fluide de régulation thermique, par l'intermédiaire desquels les cellules de stockage (2) sont à réguler thermiquement au moyen du fluide de régulation thermique,
et un élément de répartition (6), commun aux éléments de régulation thermique (5a-c) et pouvant être traversé par le fluide de régulation thermique, dans lequel des tubulures de raccordement (7a-c) respectives des éléments de régulation thermique (5a-c) sont enfichées, grâce à quoi les éléments de régulation thermique (5a-c) sont reliés de manière fluidique à l'élément de répartition (6), dans lequel l'élément de répartition (6) comprend :
- un canal de répartition (8), commun aux éléments de régulation thermique (5a-c) et pouvant être traversé par le fluide de régulation thermique ; et
- par élément de régulation thermique (5a-c), au moins ou exactement une ouverture de passage (11a-c) pouvant être traversée par le fluide de régulation thermique, dans laquelle la tubulure de raccordement (7a-c) respective de l'élément de régulation thermique (5a-c) respectif est enfichée, et dans laquelle la tubulure de raccordement (7a-c) respective fait saillie au moins partiellement dans le canal de répartition (8),
**caractérisé en ce que**
l'élément de répartition (6) comprend au moins un élément d'étranglement (15), au moyen duquel une région partielle (TB1) d'une section transversale d'écoulement (Q), pouvant être traversée par le fluide de régulation thermique, d'au moins l'une des tubulures de raccordement (7a-c) est recouverte et ainsi obturée de manière fluidique.

2. Accumulateur d'énergie électrique (1) selon la revendication 1,
**caractérisé en ce que**
la tubulure de raccordement (7a-c) respective vient en prise par l'arrière avec une région de paroi (W) respective, disposée dans le canal de répartition (8), de l'élément de répartition (6), grâce à quoi la tubulure de raccordement (7a-c) respective est maintenue sur l'élément de répartition (6).

3. Accumulateur d'énergie électrique (1) selon la revendication 1 ou 2,
**caractérisé en ce que**
la tubulure de raccordement (7a-c) respective comprend, à son extrémité (E) respective tournée vers le canal de répartition (8), un biseau d'introduction (17) respectif, qui s'étend obliquement par rapport à une direction d'enfichage (12), dans laquelle la tubulure de raccordement (7a-c) respective est enfichée dans l'ouverture de passage (11a-c) respective.

4. Accumulateur d'énergie électrique (1) selon l'une des revendications précédentes,
**caractérisé en ce que**
l'ouverture de passage (11a-c) respective est disposée dans une première région de longueur (L1) respective de l'élément de répartition (6), dans lequel, considéré le long d'une direction d'extension (4) de l'élément de répartition (6), une deuxième région de longueur (L2) respective de l'élément de répartition (6) est disposée entre deux premières régions de longueur (L1) respectives, ladite deuxième région de longueur (L2) respective étant réalisée de manière déformable élastiquement le long de la direction d'extension (4).

5. Accumulateur d'énergie électrique (1) selon la revendication 4,
**caractérisé en ce que**
la deuxième région de longueur (L2) respective est réalisée sous forme de soufflet.

6. Accumulateur d'énergie électrique (1) selon la revendication 4 ou 5,
**caractérisé en ce que**
la première région de longueur (L1) respective est formée au moins partiellement d'un premier matériau et la deuxième région de longueur (L2) respective est formée d'un deuxième matériau plus souple et/ou plus élastique que le premier matériau.

7. Accumulateur d'énergie électrique (1) selon l'une des revendications précédentes,
**caractérisé en ce que**
l'élément de répartition (6) comprend un premier matériau et un deuxième matériau plus souple et/ou plus élastiquement déformable que le premier matériau, au moyen duquel la tubulure de raccordement (7a-c) respective est étanchéifiée par rapport à l'élément de répartition (6).
